## Europäisches Patentamt
## European Patent Office
## Office européen des brevets

(19)

(11) Numéro de publication: **0 259 203 B1**

# FASCICULE DE BREVET EUROPEEN

(12)

(45) Date de publication de fascicule du brevet:
10.04.91

(51) Int. Cl.⁵: **A23C 9/154**, A23C 9/156

(21) Numéro de dépôt: 87401793.2

(22) Date de dépôt: 31.07.87

(54) **Lait chocolaté.**

(30) Priorité: 28.08.86 FR 8612153

(43) Date de publication de la demande:
09.03.88 Bulletin 88/10

(45) Mention de la délivrance du brevet:
10.04.91 Bulletin 91/15

(84) Etats contractants désignés:
AT BE CH DE ES FR GB GR IT LI LU NL SE

(56) Documents cités:
DE-A- 3 425 284          FR-A- 2 029 251
FR-A- 2 080 462          FR-A- 2 296 376
GB-A- 2 110 517          US-A- 4 219 583
US-A- 4 479 973

FSTA: 80015848; G. DE SOUZA: "Preliminary trials for manufacture of a long-life dessert", & Boletim do Instituto de Tecnologia de Alimentos, Brazil, Ref. 8, No. 60, 61-70, 1978

FSTA 83-06p0912 (ORBIT); A.B. KISSELBURGH: "Recombination of milks and creams", & Bulletin, International Dairy Federation, No. 142, 50-51, 1982

FOOD TECHNOLOGY, vol. 36, no. 11, novembre 1982, page 128, Chicago, I11, US; & JP-A-28 254/82 (DAINIPPON PHARM. K.K.)

(73) Titulaire: **RHONE-POULENC CHIMIE**
**25, quai Paul Doumer**
**F-92408 Courbevoie Cédex(FR)**

(72) Inventeur: **Schuppiser, Jean-Luc**
**12, allée Apollon Gressy**
**F-77410 Claye Souilly(FR)**
Inventeur: **Coutant, Antoine**
**137, rue de Tolbiac**
**F-75013 Paris(FR)**
Inventeur: **Bozzetto, Jean-Claude**
**2, rue Maurice Ravel**
**F-91380 Chilly Mazarin(FR)**

(74) Mandataire: **Tavernier, Colette et al**
**RHONE-POULENC INTERSERVICES Service Brevets Chimie 25, Quai Paul Doumer**
**F-92408 Courbevoie Cédex(FR)**

## Description

La présente invention a pour objet un lait chocolaté fluide, de faible viscosité, stabilisé par un mélange de gommes.

Pour la fabrication des boissons de type "lait chocolaté" les industriels utilisent couramment des carraghenates afin de favoriser la dispersion des particules de cacao. Toutefois, le pouvoir suspensif des carraghenates est très faible, résultant dans la formation d'un dépôt compact au fond du récipient après une période de stockage prolongée. Ce dépôt est commercialement indésirable.

La gomme xanthane, par ses propriétés rhéologiques remarquables, pourrait être susceptible d'améliorer le pouvoir de suspension des carraghénates. Mais il a été constaté que l'incorporation dans le lait de faibles quantités de gomme xanthane provoque une déstabilisation des caséines avec séparation du lait en deux phases liquides distinctes. Ce phénomène se produit lorsque la gomme xanthane est ajoutée seule ou en mélange avec les carraghénates et de nombreuses autres gommes.

Des mélanges de gommes ont déjà été utilisés dans les produits lactés. Par exemple, US-A-3507664 enseigne la combinaison de gomme xanthane et de gomme de caroube dans des compositions lactées gélifiées, et US-A-4242367 enseigne une combinaison de gommes guar, xanthane, carraghenate, optionnellement caroube pour prévenir la séparation du petit lait dans le lait battu (milk shake). Il est noté que dans ces application les mélanges de gommes sont utilisés en quantité nécessaire pour respectivement, soit gélifier le milieu, soit l'épaissir notablement. Typiquement, le milk shake présente une viscosité de 135-215 mPa.s (Brookfield LVT, 60 tours/min, aiguille 2) qui est indésirable pour les boissons du type "lait chocolaté". A ces valeurs de viscosité, on n'observe pas de séparation de phase.

La présente invention a pour but de fournir un lait chocolaté fluide, de faible viscosité, stable, qui puisse être stocké pendant de longues périodes sans sédimentation des particules de cacao.

Il a été trouvé des mélanges de gommes qui, introduits en faibles doses dans le lait, permettent de maintenir les particules de cacao en suspension pendant une période de temps prolongée, sans provoquer la séparation de phases du milieu lacté.

Le lait chocolaté selon l'invention présente une viscosité comprise entre 10 et 100 mPa.s (Brookfield LVT, 30 tours/min, aiguille 2, 20°C) et est caractérisé en ce qu'il contient 0,01 a 0,1 % en poids d'un mélange stabilisant comprenant de la gomme xanthane et au moins un galactomannane capable de former un gel aqueux à concentration au moins égale à 0.1 % en association avec le xanthane, le rapport pondéral xanthane/galactomannane étant compris entre 80/20 et 20/80.

La gomme xanthane est un hétéropolysaccharide de masse moléculaire de plusieurs millions, produit par fermentation des hydrates de carbone sous l'action de bactéries du genre Xanthomonas et plus particulièrement Xanthomonas campestris , ou autres espèces bien répertoriées dans la littérature.

Les galactomannanes sont des gommes naturelles dérivées de graines de la famille des Légumineuses. Ils sont constitués d'unités D-galactose et D-mannose. Parmi les galactomannanes susceptibles de former des gels continus avec la gomme xanthane à concentration au moins égale à 0,1 % dans un milieu aqueux, on cite en particulier la gomme de caroube, la gomme Tara et la gomme Cassia.

Toutes ces gommes sont disponibles dans le commerce en différents grades dépendant des techniques de production et de traitement. On peut utiliser n'importe quel grade de qualité alimentaire.

La quantité totale de gommes que l'on inclue dans le lait peut varier de 0.01 % à 0.1 %, de préférence 0.03 à 0.07 %. Des quantités supérieures à 0.1 % conduisent à un épaississement trop élevé indésirable. Le rapport pondéral entre la gomme xanthane et le galactomannane peut varier de 80/20 à 20/80, de préférence 40/60 à 60/40 et plus préférentiellement 50/50.

La préparation du lait chocolaté est réalisée par mélange des poudres dans le lait, suivi d'un traitement de conservation par pasteurisation ou stérilisation. Il est préférable de disperser les gommes dans le lait puis d'ajouter la poudre de cacao en quantité généralement comprise entre 1,5-2 %. et éventuellement du sucre en quantité de 6-8 %. La suspension résultante est soumise à un traitement thermique à une température et pendant un temps suffisant pour assurer la pasteurisation ou la stérilisation. Ce traitement est réalisé conventionnellement à une température de 80-150°C pendant une durée variable pouvant aller de 2 secondes à plusieurs minutes, par exemple 15 minutes, selon la technologie utilisée. De manière préférentielle, la stérilisation est réalisée à une température égale ou supérieure à 120°C pendant 2 à 10 secondes. Le mélange est ensuite refroidi tout en maintenant le liquide en mouvement jusqu'à une température au moins inférieure au point de gélification de l'association xanthane/galactomannane. Le point de gélification est défini par la température de passage à l'état solide d'une solution fluide du mélange de gommes au cours de son refroidissement. Il est fonction notamment de la nature de chacune des gommes et de leur rapport pondéral. Il se situe le plus souvent dans un intervalle compris entre 40-60°C. Le maintien du liquide en conditions non statiques au moins jusqu'à un point inférieur à la température de gélification est nécessaire pour éviter la formation d'agrégats gélifiés qui seraient nuisibles à la stabilité de la suspension. Le refroidissement pourra être réalisé par exemple dans une cuve équipée de moyens d'agitation ou dans un échangeur thermique de type tubulaire, à plaques, ou autre, l'écoulement du liquide étant suffisant pour assurer l'agitation nécessaire. Le produit résultant peut alors être conditionné en flacons et refroidi à nouveau si nécessaire. En procédant de la manière indiquée, on obtient un lait chocolaté de faible viscosité, homogène, stable, pouvant être conservé pendant plus d'un mois sans formation d'un dépôt compact de particules de cacao, qui nécessiterait une agitation énergique pour être rehomogénéisé au moment de l'emploi.

Le lait peut être fourni comme lait entier, lait demi-écrémé ou par reconstitution à partir de solides du lait disponibles industriellement. IL est nécessaire que les gommes soient bien hydratées pour éviter la destabilisation des caséines du lait. On peut éventuellement effectuer un traitement de pré-chauffage afin de s'assurer d'une hydratation optimale du galactomannane.

Les exemples suivants illustrent l'invention. Dans tous les exemples on utilise :
- un lait UHT (stérilisé ultra haute température) demi-écrémé
- une gomme xanthane RHODIGEL ® commercialisée par RHONE-POULENC.


EXEMPLE 1

Pour démontrer la spécificité du mélange de gommes selon l'invention sur la stabilité du lait, on prépare des échantillons par dispersion des gommes dans le lait, agitation 15 minutes. La séparation des phases liquides est observée après 4 jours de stockage à 4°C dans des éprouvettes graduées de 100 ml, temps après lequel le volume des phases est constant. Tous les mélanges binaires sont employés dans le rapport pondéral 1/1 sauf indication contraire. Les résultats figurent dans le Tableau 1.

Tableau 1

|  | % POIDS | SEPARATION (Volume en ml de la phase supérieure |
| --- | --- | --- |
| G. Xanthane | 0.02 | 24 |
|  | 0.04 | 35 |
|  | 0.08 | 57 |
| G. Xanthane/carraghenate | 0.08 | 37 |
| G. Xanthane/pectine | 0.08 | 43 |
| G. Xanthane/alginate Na | 0.08 | 37 |
| G. Xanthane/CMC | 0.08 | 57 |
| G. Xanthane/H PMC | 0.08 | 61 |
| G. Xanthane/caroube | 0.08 | néant |
| G. Xanthane/Tara* | 0.05 | néant |
| G. Xanthane/Cassia* | 0.05 | néant |
| G. Xanthane/caroube 90/10* | 0.05 | 80 |
| 80/20* | 0.05 | léger éclaircissement en surface |

\* : stérilisation 120°C, 7 sec.


EXEMPLE 2

Un mélange 50/50 de gomme Xanthane et de caroube (Locust bean gum FL 45-60 commercialisé par Hercules Inc.) est dispersé dans le lait à différentes concentrations, sous agitation à 700 tours/min, à 23°C.

L'agitation est maintenue pendant 15 min.. On ajoute 7 % de sucre et 2 % de poudre de cacao (Cacao BARRY - 99,5 % particules inférieures à 75 μm, pH 7,8± 0,2, beurre de cacao 10 %) en maintenant l'agitation pendant 5 min.

On stérilise à 120°C pendant 7 secondes puis on refroidit jusqu'à 4°C par circulation dans un échangeur thermique tubulaire et on transvase dans une éprouvette de 100 ml.

On mesure la viscosité (Brookfield LVT, 30 tours/min., aiguille 2, 20°C) et on observe la stabilité de la suspension de cacao en fonction du temps, par mesure du volume de surnageant clair (absence de particules de cacao). Les résultats figurent dans le Tableau 2.

## Tableau 2

| | % XANTHANE-CAROUBE 50/50 | | | | |
|---|---|---|---|---|---|
| | 0.01 | 0.02 | 0.04 | 0.05 | 0.06 |
| Viscosité (mPa.s) | | 10 | 30 | 35 | 40 |
| Stabilité (ml surnageant) | | | | | |
| 1er jour | 58 | 48 | 1 | 0 | 0 |
| 2ème jour | 60 | 51 | 3 | 1 | 0 |
| 3ème jour | 77 | 56 | 7 | 3 | 3 |
| 7ème jour | | 65 | 10 | 7 | 8 |
| 14ème jour | | | 13 | 11 | |
| 21ème jour | | | 20 | | 16 |
| 28ème jour | | | | 17 | 20 |

On observe une bonne stabilité après une longue conservation pour une concentration supérieure à 0.02 %. Dans tous les cas, il suffit d'une faible agitation ou d'un transvasement dans un verre pour que le lait chocolaté retrouve une apparence homogène, lisse. Aucune séparation de phases due à l'exclusion des caséines n'a lieu au cours du temps. Les valeurs de viscosité sont voisines de celles d'un lait chocolaté commercial.

## EXEMPLE 3

On prépare un lait chocolaté de la manière indiquée à l'exemple 2 en faisant varier le rapport et la concentration des gommes.

| | XANTHANE/CAROUBE | | | | |
|---|---|---|---|---|---|
| Stabilité (ml de surnageant pour 100 ml) | 80/20 0.02 % | 60/40 0.05 % | 50/50 0.05 % | 40/60 0.05 % | 20/80 0.1 % |
| 1 jour | | 2 | 0 | 6 | |
| 3 jour | | 5 | 3 | 15 | |
| 7 jour | | 10 | 7 | 20 | |
| 15 jour | 80 | 20 | 11 | 35 | 63 |

## EXEMPLE 4

On prépare un lait chocolaté de la manière indiquée à l'exemple 2 en utilisant 0.03 % de gomme Xanthane, 0.03 % de caroube, 7 % de sucre et 2 % de poudre de cacao. La température de stérilisation est de 130° C pendant 7 secondes.

| Durée (jours) | 1 | 2 | 5 | 15 | 20 |
|---|---|---|---|---|---|
| Stabilité (ml de surnageant pour 100 ml) | 0 | 0 | 0 | 2 | 3 |

## EXEMPLE 5

On prépare un lait chocolaté de la manière indiquée dans l'exemple 2 en utilisant 0.05 % d'un mélange stabilisant 50/50 de gomme xanthane et de gomme Tara ou de gomme Cassia.

| Durée (jours) | 1 | 3 | 7 | 15 | 20 |
|---|---|---|---|---|---|
| Stabilite (ml de surnageant pour 100 ml) | | | | | |
| Xanthane/Tara | 1 | 6 | 20 | 25 | 37 |
| Xanthane/Cassia | 0 | 2 | 11 | 16 | 20 |

Comme dans les exemples précédents, il suffit d'un simple transvasement pour que le lait chocolaté retrouve une apparence homogène.

## Revendications

1. Lait chocolaté de viscosité comprise entre 10 et 100 mPa.s caractérisé en ce qu'il contient 0,01 à 0,1 % en poids d'un mélange stabilisant comprenant de la gomme Xanthane et au moins un galactomannane capable de former un gel aqueux en association avec la gomme Xanthane à concentration au moins égale à 0.1 %, le rapport pondéral Xanthane/galactomannane étant compris entre 80/20 et 20/80.

2. Lait chocolaté selon la revendication 1 caractérisé en ce que le galactomannane est choisi parmi la gomme de caroube, la gomme Tara, la gomme Cassia.

3. Lait chocolaté selon l'une des revendication 1 ou 2 caractérisé en ce qu'il contient 0,03 à 0,07 % du mélange stabilisant.

4. Lait chocolaté selon l'une des revendications 1 à 3 caractérisé en ce que le rapport pondéral Xanthane/galactomannane est compris entre 40/60 et 60/40.

5. Lait chocolaté selon l'une des revendications 1 à 4 caractérisé en ce qu'il contient 1,5 à 2 % de poudre de cacao et 6 à 8 % de sucre.

6. Procédé de préparation d'un lait chocolaté ayant une viscosité comprise entre 10 et 100 mPa.s caractérisé en ce qu'il consiste à disperser dans le lait 0.01 à 0.1 % en poids d'un mélange de gomme Xanthane et d'au moins un galactomannane capable de former un gel aqueux en association avec la gomme Xanthane à concentration au moins égale à 0,1 %, dans un rapport pondéral Xanthane/galactomannane compris entre 80/20 et 20/80, à ajouter de la poudre de cacao, éventuellement du sucre, à stériliser ou pasteuriser à une température de 80-150°C, puis à refroidir en maintenant le liquide en mouvement au moins jusqu'à une température inférieure au point de gélification de l'association xanthane-galactomannane.

7. Procédé selon la revendication 6 caractérisé en ce que la stérilisation est effectuée à une température égale ou supérieure à 120°C pendant 2 à 10 secondes.

8. Procédé selon les revendications 6 ou 7 caractérisé en ce que le liquide est maintenu en mouvement jusqu'à une température inférieure à 40-60°C en fonction du point de gélification du mélange de gommes.

## Claims

1. Chocolate milk with a viscosity of between 10 and 100 mPa.s, characterized in that it contains 0.01 to 0.1% by weight of a stabilizing mixture comprising xanthan gum and at least one galactomannan capable of forming an agueous gel in combination with xanthan gum at a concentration not less than 0.1%, the gravimetric ratio xanthan:galactomannan being between 80:20 and 20:80.

2. Chocolate milk according to claim 1, characterized in that the galactomannan is chosen from amongst carob gum, tara gum and cassia gum.

3. Chocolate milk according to either of claims 1 and 2, characterized in that it contains 0.03 to 0.07% of stabilizing mixture.

4. Chocolate milk according to one of claims 1 to 3, characterized in that the gravimetric ratio xanthan:galactomannan is between 40:60 and 60:40.

5. Chocolate milk according to one of claims 1 to 4, characterized in that it contains 1.5 to 2% of cocoa powder and 6 to 8% of sugar.

6. Process for the preparation of a chocolate milk having a viscosity of between 10 and 100 mPa.s, characterized in that it consists in dispersing in the milk 0.01 to 0.1% by weight of a mixture of xanthan gum and at least one galactomannan capable of forming an agueous gel in combination with xanthan gum at a concentration not less than 0.1%, in a gravimetric ratio xanthan:galactomannan of between 80:20 and 20:80, in adding cocoa powder and, if reguired, sugar, in sterilizing or pasteurizing at a temperature of 80-150°C, and then in cooling, while maintaining the liquid in motion at least until a temperature less than the gelling point of the xanthan-galactomannan combination is obtained.

7. Process according to claim 6, characterized in that the sterilization is carried out at a temperature equal to or greater than 120°C for 2 to 10 seconds.

8. Process according to claim 6 or 7, characterized in that the liquid is maintained in motion until a temperature less than 40-60°C is obtained, depending on the gelling point of the mixture of gums.

## Ansprüche

1. Kakaomilch mit einer Viskosität zwischen 10 und 100 mPas, dadurch gekennzeichnet, daß sie 0,01 bis 0,1 Gew.% eines Stabilisierungsgemischs enthält, das Xanthangummi und wenigstens ein Galaktomannan umfaßt, welches in der Lage ist, in Verbindung mit dem Xanthangummi ein wässriges Gel einer Konzentration von wenigstens gleich 0,1 % zu bilden und das Gewichtsverhältnis Xanthan/Galaktomannan zwischen 80/20 und 20/80 beträgt.

2. Kakaomilch nach Anspruch 1, dadurch gekennzeichnet, daß das Galaktomannan aus Johannisbrotbaum-, Taraund Cassiapflanzengummi ausgewählt ist.

3. Kakaomilch nach Anspruch 1 oder 2, dadurch gekennzeichnet, daß sie 0,03 bis 0,07 % Stabilisierungsgemisch enthält.

4. Kakaomilch nach einem der Ansprüche 1 bis 3, dadurch gekennzeichnet, daß das Gewichtsverhältnis Xanthan/Galaktomannan zwischen 40/60 und 60/40 liegt.

5. Kakaomilch nach einem der Ansprüche 1 bis 4, dadurch gekennzeichnet, daß sie 1,5 bis 2 % Kakaopulver und 6 bis 8 % Zucker enthält.

6. Verfahren zur Herstellung einer Kakaomilch mit einer Viskosität zwischen 10 und 100 mPas, dadurch gekennzeichnet, daß es besteht aus dem Dispergieren von 0,01 bis 1 Gew.% eines Gemischs aus Xanthangummi und wenigstens einem Galaktomannan, welches in der Lage ist, in Verbindung mit dem Xanthangummi ein wässriges Gel einer Konzentration von wenigstens 0,1 % zu bilden, in einem Gewichtsverhältnis Xanthan/Galaktomannan zischen 80/20 und 20/80 in der Milch, der Zugabe des Kakaopulvers und gegebenenfalls von Zucker, der Sterilisierung oder Pasteurisierung bei einer Tempe-ratur von 80 bis 150°C und anschließender Abkühlung auf wenigstens eine Temperatur unter dem Gelierungspunkt der Verbindung Xanthan/Galaktomannan, wobei die Flüssigkeit in Bewegung gehalten wird.

7. Verfahren nach Anspruch 6, dadurch gekennzeichnet, daß die Sterilisierung 2 bis 10 Sekunden lang bei einer Temperatur von gleich oder höher als 120° C durchgeführt wird.

8. Verfahren nach Anspruch 6 oder 7, dadurch gekennzeichnet, daß die Flüssigkeit bis zu einer Temperatur von niedriger als 40 bis 60° C in Abhängigkeit vom Gelierpunkt des Pflanzengummigemischs bewegt wird.